Europäisches Patentamt

(19) European Patent Office

Office européen des brevets

(11) EP 0 782 063 A1

(12) **EUROPEAN PATENT APPLICATION**

(43) Date of publication:
02.07.1997 Bulletin 1997/27

(51) Int. Cl.$^6$: **G06F 1/03**

(21) Application number: **95402947.6**

(22) Date of filing: **26.12.1995**

(84) Designated Contracting States:
DE FR GB IT NL

(71) Applicant: **LSI LOGIC CORPORATION**
**Milpitas, CA 95035 (US)**

(72) Inventor: **Sadot, Philippe Roger**
**F-92410 Ville D'Avray (FR)**

(74) Representative: **Harris, Ian Richard et al**
c/o D. Young & Co.,
21 New Fetter Lane
London EC4A 1DA (GB)

(54) **Noise reduction in digital frequency synthesizers**

(57) A digital synthesizer for producing a digital frequency signal includes a phase accumulator for repeatedly accumulating a phase value to generate samples of a digital sawtooth signal and a look-up table of digital samples for converting the digital sawtooth signal to a digital waveshape signal. In order to reduce the effect of noise resulting from the truncation of the phase accumulator output for addressing the look-up table, a (first order) sigma-delta modulator is provided for processing the digital sawtooth signal samples output from the phase accumulator before being input to the look-up table.

FIG. 4

EP 0 782 063 A1

## Description

The invention relates to digital frequency synthesizers, and in particular to the reduction of noise in such synthesizers.

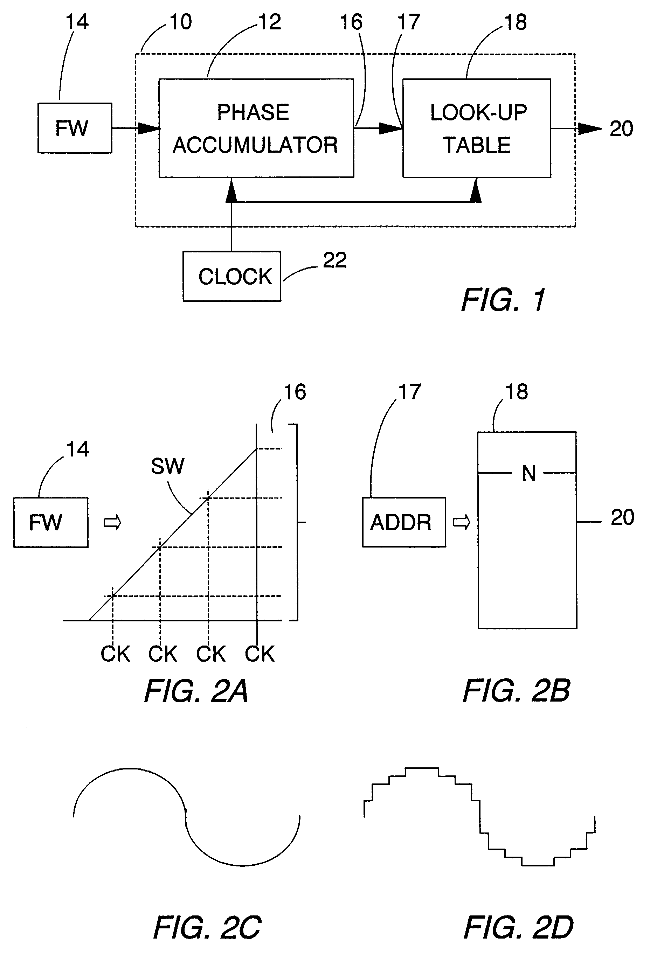

Direct Digital Frequency Synthesis (DDFS or DDS) is a technique for generating digital frequency signals. Figure 1 is a schematic block diagram of a frequency synthesizer for implementing the technique.

In Figure 1 a phase accumulator 12 repeatedly accumulates a phase value 14 (a phase increment is often called a constant frequency word (FW) or delta-phase word) to generate samples 16 of a digital sawtooth signal, and a look-up table 18 of digital samples for converting the digital sawtooth signal to a digital waveshape for the digital frequency signal 20. The digital samples stored in the look-up table 18 are typically either sine or cosine values for generating a sine wave as the digital frequency signal. A clock 22, which can be external or internal, provides a clock signal CK at a frequency C which allows the digital frequency synthesizer to generate any frequency between 0 and approximately 0.4C.

The generated frequency $f$ is related to the constant frequency word (FW) and the accumulator length L by: $f = C * FW/2^L$.

The frequency resolution is $C/2^L$. For example, with a reference clock at 100MHz and a 32-bit accumulator, the resolution is 0.023Hz.

Figure 2 illustrates the steps in this process as performed by the apparatus of Figure 1. As illustrated in Figure 2A, by adding a constant frequency word 14 on every clock signal CK of the clock 22 to an accumulator 12, and arranging for this to operate in a cyclic fashion, it is possible to generate a sawtooth waveform SW. The sawtooth waveform is sampled by reading out the accumulated values at 16 once per clock signal CK. For a given clock frequency and accumulator resolution, the larger the value of the constant frequency word, the higher the frequency of the sawtooth waveform.

As illustrated in Figure 2B, the sawtooth waveform samples are used as to address the digital waveform samples in the look-up table 18. Typically, the address resolution of the look-up table 18 is less than the resolution of the accumulator 12. Accordingly, the sawtooth waveform samples are truncated in order to generate the look-up table addresses 17.

The digital frequency signal 20 is output as a series of digital waveform samples, with a digital waveshape sample being generated for each clock signal CK. Figure 2C is a schematic representation of a smooth waveform (typically, in practice, a sine wave) and Figure 2D is a schematic representation of the resulting digital waveshape of the digital frequency signal, which is quantized and therefore does not exactly correspond to the smooth waveform.

Synthesizers of this type are particularly effective as a technique for generating frequency signals where rapid frequency switching is required because the frequency switching time is much less than comparable analog frequency modulators.

Accordingly, this technique is widely used in the design of digital modulators, for example quadrature amplitude modulators and phase switched keying modulators (M-QAM, M-PSK), and for frequency hopping modems.

However, conventional digital frequency synthesizers suffer from noise problems due to the presence of spurious spectral lines in the frequency signals they generate.

It has been determined that the spectral lines arise from a number of sources.

1) Although the interval between the phase accumulator overflows is not strictly constant, the overflow is a periodic signal, with a period equal to the lowest common multiplier of the constant frequency word and $2^N$.

2) The sawtooth signal is truncated before addressing the look-up table, which creates quantization noise, which is also periodic, with a period equal to the sawtooth signal, that is equal to the lowest common multiplier of the constant frequency word and $2^N$.

3) The look-up table contains quantized digital samples of the waveshape (typically sine or cosine) values which adds to the quantization error.

4) If a Digital to Analog Converter (DAC) is used to convert the sine samples to an analog signal, its non-linearity also introduces a periodic noise source.

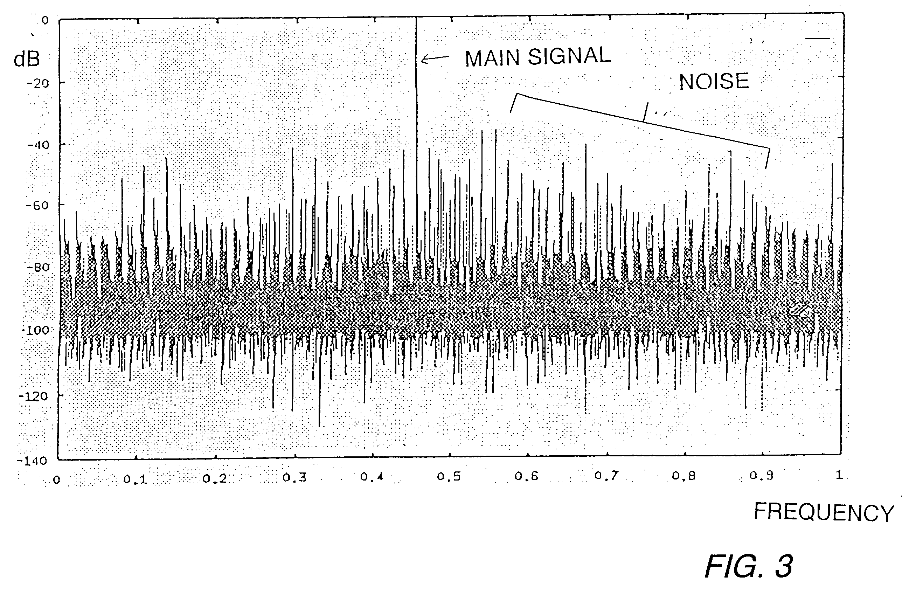

All of these signals generate discrete spurious spectral lines which can be as high as -40dBc from the main signal as represented in Figure 3. Conventionally, to reduce the effects of the spurious spectral lines, a very large look-up table is used. In particular many address bits are used to minimize the effects of phase truncation (the second noise source in the above list) and a large look-up table word size is used to minimize the sample quantization noise (the third word noise source in the above list).

An aim of the present invention is to reduce the effect of the second noise source permitting the use of a reduction in the number of addresses in the look-up table and consequently a reduction in the number of address bits needed to address the look-up table.

In accordance with one aspect of the invention, there is provided a digital synthesizer for producing a digital frequency signal comprising: a phase accumulator for repeatedly accumulating a phase value to generate samples of a digital sawtooth signal at an output of the phase accumulator; a look-up table of digital samples for converting the digital sawtooth signal to a digital waveshape signal, the look-up table having an input for receiving digital sawtooth signals samples; and a sigma-delta modulator, connected between an output of the phase accumulator and the input of the look-up table for processing the digital sawtooth signal samples output from the phase accumulator before being input to the look-up table.

The use of a sigma-delta modulator has the effect of shaping the quantization noise which results from the truncation of the output of the phase accumulator. In particular it has the effect of improving the main signal to strongest spurious line ratio for a given look-up table size by shifting the noise density towards higher frequencies.

Preferably the sigma-delta modulator is a first order sigma-delta modulator. Higher order sigma-delta modulators can be used, but they do not significantly improve the performance and require a higher gate count to implement compared to the first order sigma-delta modulator.

Where the input to the look-up table has S bits, the S most significant bits of the sigma-delta modulator preferably form the input to the look-up table.

In this case, the first order sigma-delta modulator preferably comprises a summer connected to receive a T-bit sawtooth signal sample and a T-bit feedback signal sample for subtracting the feedback signal sample from the sawtooth signal sample, an integrator for integrating the T-bit output of the summer, a quantizer for setting T-S least significant bits of the T-bit output of the integrator to zero and a feedback path for feeding back the output of the quantizer as a said T-bit feedback signal sample.

The invention also provides a digital modulator comprising a digital frequency synthesizer as defined above.

The invention further provides an integrated circuit comprising a digital frequency synthesizer as defined above.

Embodiments of the invention will be described hereinafter, by way of example only, with reference to the accompanying drawings in which:

Figure 1 is a schematic block diagram of a typical digital frequency synthesizer;
Figures 2A, 2B, 2C and 2D schematically represent the generation of the digital frequency signal;
Figure 3 is a plot, in the frequency domain, of a typical digital frequency signal generated by a conventional digital frequency synthesizer;
Figure 4 is schematic block diagram of an example of a digital frequency synthesizer in accordance with the invention;
Figure 5 illustrates the effect of using a sigma-delta modulator in a digital frequency synthesizer in accordance with the invention;
Figure 6 is a schematic block diagram of a quadrature amplitude modulator (QAM) employing a digital frequency synthesizer in accordance with the invention; and
Figure 7 is a schematic block diagram of a further embodiment of a digital frequency synthesizer in accordance with the invention.

Figure 1 is a schematic block diagram of a typical digital frequency synthesizer. A digital frequency synthesizer in accordance with the invention comprises the same basic configuration, but includes means for processing the output of the phase accumulator 12.

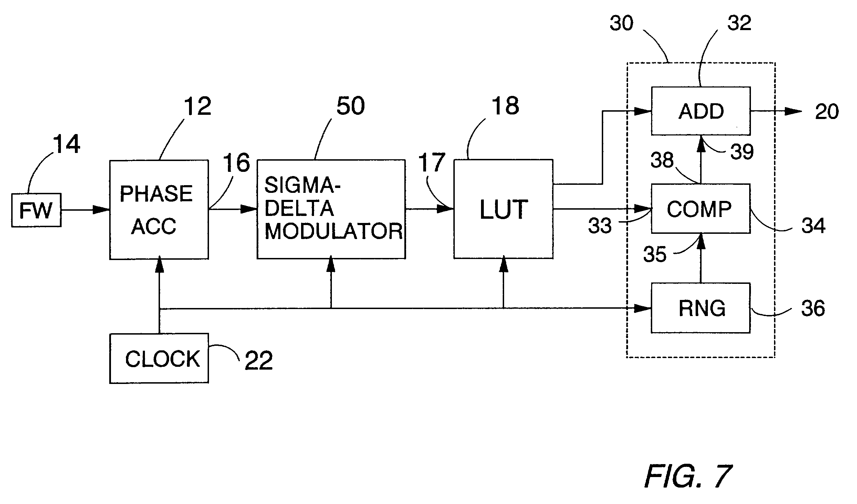

Figure 7 is a schematic block diagram of an example of a digital frequency synthesizer in accordance with the invention which includes a first order sigma-delta modulator 50 between the output of the phase accumulator and the input of the look-up table 18. As has been explained in the introduction, the output of the phase accumulator 12 is truncated before being used to address the look-up table 18. This is because the phase accumulator 12 operates with more bits of precision than is practical for addressing the look-up table 18.

If the phase accumulator comprises a T-bit accumulator and the address range of the look-up table is S bits, then the accumulator output must be truncated, discarding the T-S least significant bits of the accumulator output.

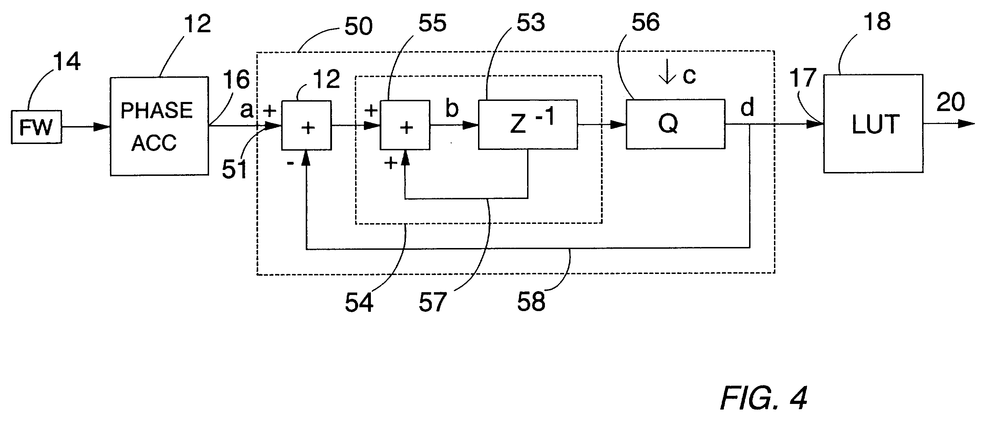

In Figure 4, the first order sigma-delta modulator 50 comprises a summer 52, an integrator 54, a quantizer 56 and a feedback path 58. The summer 52 receives the T-bit sawtooth signal samples at 51 from the output of the phase accumulator. The summer subtracts from the T-bit sawtooth signal samples a T-bit feedback signal on the path 58. The T-bit output of the summer is passed to the integrator 54, which is a conventional digital integrator with a delay 53, summer 55 and feedback path 57. The integrated output is passed to the quantizer 56 which sets the T-S least significant bits to zero and outputs the S most significant bits at 59 to form the address input to the look-up table 18. It also feeds back T bits including the T-S least significant bits set to zero and the S most significant bits on the feedback path 58 to form the feedback signal at the summer 52.

The effect of the first order sigma-delta modulator on noise will be explained in the following. For a particular sampling instant, the input to the modulator, the output of the integrator, the quantization noise and the output of the modulator are designated and $a_i$, $b_i$, $c_i$ and $d_i$, respectively.

Thus it can be seen that:

$$b_i = a_{i-1} - d_{i-1} + b_{i-1} \text{ and } d_{i-1} = b_{i-1} + c_{i-1}$$

Whereby:

$$b_i = a_{i-1} - c_{i-1}$$

The output signal is:

$$d_i = a_{i-1} + c_i - c_{i-1}$$

From which it can be seen that the transfer function for z is:

$$D(z) = z^{-1}A(z) + (1 - z^{-1})C(z)$$

It is possible to separate this into two terms, namely the transfer function for the signal $STF(z) = z^{-1}$, and the transfer function for the noise $NTF(z) = (1 - z^{-1})$. The quantization noise is, therefore, differentiated, whereas the input signal is not altered, it is simply delayed.

The effect of the differentiation is to move the spectral density of the quantization noise towards the higher frequencies. Thus the spectral density of the quantization noise is not linear versus frequency, but rather weighted towards higher frequencies. The sigma-delta modulator thus acts as a noise shaper, reducing the low frequency noise density and increasing the high frequency noise density.

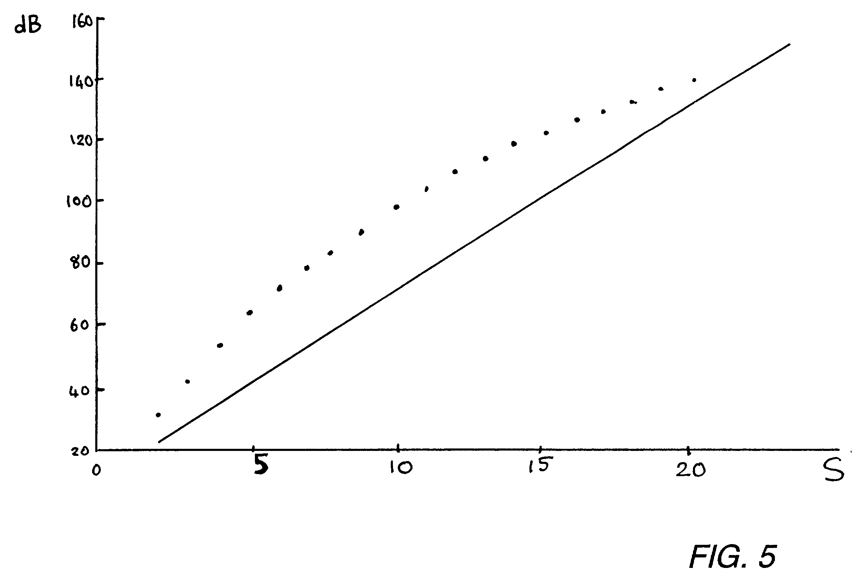

Through the use of a sigma-delta modulator between the output of the phase accumulator and the look-up table, the ratio of the main signal to the strongest spurious line (signal to spurious ratio SSR) can be improved by a factor which depends on the number of truncated bits. An example of this is shown on the curve in Figure 5.

In Figure 5, the abscissa forms the number of address bits of the look-up table and the ordinates the SSR. The solid line indicates the SSR without the sigma-delta modulator 50, the dotted line the SSR with the sigma-delta modulator. For a range of 10 to 15 address bits, which represent typical values, the improvement which can be achieved with the use of the sigma-delta modulator reaches more than 25 dBs. The use of the sigma-delta modulator provides a significant improvement as it enables the generation of spectrally pure frequency signals (sine waves) at low cost. Prior to the invention, the only solution was to use larger look-up tables. Adding one address bit to the look-up table doubles its size and provides only a 5dB improvement to the spectral purity. By using a first order sigma-delta modulator as described a 25% improvement can be achieved. This corresponds to a reduction in the size of the look-up table which would be needed by a factor of $2^5 = 32$. The sigma-delta modulator can be implemented using conventional techniques and with a low gate count (less than 1000 gates).

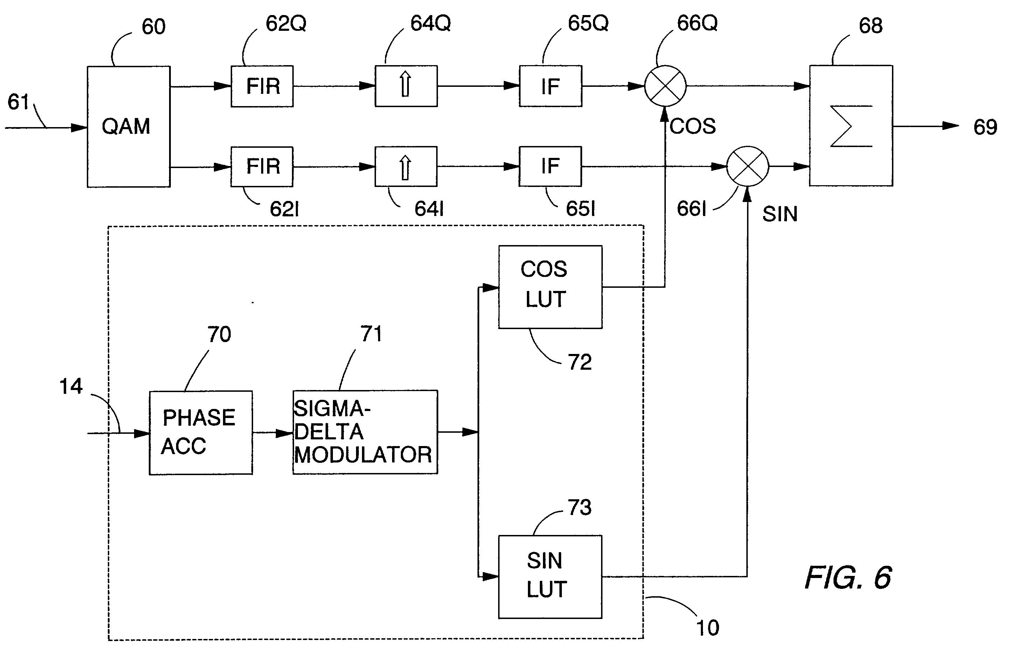

Figure 6 is a schematic block diagram of a quadrature amplitude modulator incorporating a digital frequency synthesizer in accordance with the invention.

An input bit stream 61 is received by a quadrature amplitude modulation mapper 60 which maps the bit stream values to form streams of Q and I values. The Q and I values are passed via respective FIR filters 62Q, 62I and respective up-samplers 64Q and 64I. The streams of Q and I values from the up-samplers 64Q and 64I are passed via respective interpolators 65Q and 65I, the outputs of which are multiplied by streams of cosine and sine values, respectively, in respective multipliers 66Q and 66I before being added in an adder 68 to be output as a modulated signal 69. The cosine and sine values are generated by a digital frequency synthesizer constructed in accordance with the teaching of the present invention, as can be seen in Figure 6.

The digital frequency synthesizer 10 in this embodiment of the invention generates a first digital frequency signal using cosine values and a second digital frequency signal using sine values. In this example, a single phase accumulator 70 generates successive sawtooth signals as described for the phase accumulator 12 of Figure 1. The sawtooth samples output of the phase accumulator 70 are passed to a single sigma-delta modulator 71 as described above. The output of the sigma-delta modulator is passed in parallel to a cosine look-up table 72 and a sine look-up table 74. In each of the cosine and sine tables 72 and 74 appropriate digital samples are stored. The output of each of the cosine and sine tables is passed to the respective multipliers 66Q and 66I, respectively. It will be appreciated that the cost of implementing the digital frequency synthesizer for dual cosine and sine signals can be reduced by sharing the phase accumulator and sigma-delta modulator between the cosine and sine channels. Also, a common internal, or external clock (not shown) can be used.

A digital synthesizer as described above can be implemented using any appropriate circuit technology. Typically, it will be implemented in an integrated circuit (e.g., an ASIC) using conventional integrated circuit technology. It could be implemented as a separate component, but will typically be implemented with other functions (e.g. as or including a modulator as described with reference to Figure 6) in an integrated circuit.

Although particular embodiments of the invention have been described by way of example, it will be appreciated that additions, modifications and alternatives thereto may be envisaged.

For example, a higher order sigma-delta modulator could be used, but this does not provide any significant further improvement and requires a greater complexity.

The performance of the digital frequency synthesizer in accordance with the present invention could be further improved by employing means for reducing the effect of the third noise source described above. Suitable means for this form the subject matter of a co-pending application filed on the same date as the present application and entitled "Reducing Noise in Digital Frequency Synthesizers" (Attorney Docket E408-13). The co-pending application describes the use of a randomiser for processing the output of the look-up table 18 to reduce the effect of the quantization noise which results from quantization of the digital samples in the look-up table.

Figure 8 is a schematic block diagram illustrating how the synthesizer of Figure 4 could be modified by applying a randomising factor to output digital samples to form the digital frequency signal.

In Figure 8, the aim is to generate a digital frequency signal with a sample resolution of N+1 bits, comprising N waveshape bits plus a sign bit for each sample. In this embodiment the sign bit is supplied directly from the phase accumulator 12 and therefore is not stored in the look-up table 18. However, in order to simplify the drawings, this is not shown in the Figures.

The look-up table 18 (typically a ROM) is arranged to stored N+P bit digital sine samples. It will be appreciated that cosine values rather than sine values can also be stored in the look-up table 18. Accordingly, where reference is made to sine values in the following, it will be understood that a reference to cosine values could be substituted instead. The digital samples stored in the look-up table are computed in the following manner:

1) The N most significant bits are obtained as if the sine values were sampled directly, but with the lowest matching integer being selected rather than the nearest. In other words, when rounding the sampling values they are rounded down rather than being rounded to the nearest integer. The sine maximum value will correspond to the maximum value storable in the look-up table with N bits set to one. The N-bit maximum value will be used only once.

2) The P least significant bits are then computed. The difference between the N-bit sample value and the exact sine value (multiplied by $2^N$) ranges from 0 to 1. This difference is then sampled into the P least significant bits. The N+P decomposition is like a decimal sampling of the sine, where the N code forms the integer part and P the decimal (fractional) part, the sine having been scaled exactly to fit in the $0,2^N$ scale.

Figure 7 schematically represents a randomiser 30 connected to the output of the look-up table 18. The randomiser 30 comprises a summer (here an adder) 32, a comparator 34 and a pseudo-random number generator 36. The adder 32 is connected to receive the N most significant bits of digital samples output from the look-up table 18. A first input 33 of the comparator 34 is connected to receive a P-bit number formed by the P least significant bits of a data sample output from the look-up table 18. A second input 35 is connected to receive the P-bit pseudo-random number output of the pseudo-random number generator 36. The pseudo-random number generator 36 is clocked by the clock 22 to supply a P-bit pseudo-random number for each digital sample output from the look-up table 18. The comparator 34 is arranged to compare each P-bit number output from the look-up table to the correspondingly produced P-bit pseudo-random number. The comparator 34 is arranged to output a logical 1 at an output 38 when the P-bit number is greater than the P-bit pseudo-random number. The output 38 of the comparator 34 is connected to a carry-in input 39 of the adder 32, so that when a logical 1 is output from the comparator 34, one is added to the N-bit number formed by the N most significant bits of the digital sample. The comparator 34 is arranged to output a logical 0 at the output 38 when the P-bit number is less than or equal to the P-bit pseudo-random number so that nothing is added to the N-bit number formed by the N most significant bits of the digital sample.

On average therefore, the N-bit output of the randomiser will be the N,P value, as in the case of a one bit DAC. For the purposes of illustration only, if a digital sample of an input where the N=3 bits are 100 and the P=2 bits are 01, the randomiser would generate an (N=3)-bit output with a 75% probability and an (N=3)-bit output of 101 with a 25% probability, for an average of 100,01. The additional P bits can thus be thought of as the "decimal" part, or the probability of adding +1 to the N most significant bit number.

The result of using the randomiser is to add a randomising factor to the generation of the least significant digit. Thus this technique reduces the effect of the quantization of the digital samples in the look-up table.

The co-pending application mentioned above and incorporated herein by reference, which was filed on the same date as the present application and entitled "Reducing Noise in Digital Frequency Synthesizers" (Attorney Docket E408-13), also describes alternative embodiments of the randomiser.

**Claims**

1. A digital synthesizer for producing a digital frequency signal comprising:

a phase accumulator for repeatedly accumulating a phase value to generate samples of a digital sawtooth signal at an output of the phase accumulator;

a look-up table of digital samples for converting the digital sawtooth signal to a digital waveshape signal, the look-up table having an input for receiving digital sawtooth signals samples; and

a sigma-delta modulator, connected between an output of the phase accumulator and the input of the look-up table for processing the digital sawtooth signal samples output from the phase accumulator before being input to the look-up table.

2. A digital synthesizer according to claim 1, wherein the sigma-delta modulator is a first order sigma-delta modulator.

3. A digital synthesizer according to claim 2, wherein the first order sigma-delta modulator comprises a summer connected to receive a T-bit sawtooth signal sample and a T-bit feedback signal sample for subtracting the feedback signal sample from the sawtooth signal sample, an integrator for integrating the T-bit output of the summer, a quantizer for setting S least significant bits of the T-bit output of the integrator to zero and a feedback path for feeding back the output of the quantizer as a said T-bit feedback signal sample.

4. A digital synthesizer according to claim 3, wherein the input to the look-up table has T-S bits, the T-S most significant bits of the sigma-delta modulator forming the input to the look-up table.

5.  A digital modulator comprising a digital frequency synthesizer according to any one of the preceding claims.

6.  An integrated circuit comprising a digital frequency synthesizer according to any one of claims 1 to 4.

FIG. 1

FIG. 2A

FIG. 2B

FIG. 2C

FIG. 2D

FIG. 3

*FIG. 4*

EP 0 782 063 A1

*FIG. 5*

EP 0 782 063 A1

FIG. 6

FIG. 7

EP 0 782 063 A1

European Patent
Office

**EUROPEAN SEARCH REPORT**

Application Number

EP 95 40 2947

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | IEEE TRANSACTIONS ON COMMUNICATIONS, vol. 39, no. 7, 1 July 1991, pages 1046-1048, XP000264864 O'LEARY P ET AL: "A DIRECT-DIGITAL SYNTHESIZER WITH IMPROVED SPECTRAL PERFORMANCE" * section III ; figure 4 * --- | 1,2,5,6 | G06F1/03 |
| A | IEEE JOURNAL OF SOLID-STATE CIRCUITS, vol. 28, no. 5, 1 May 1993, pages 553-559, XP000368743 RILEY T A D ET AL: "DELTA-SIGMA MODULATION IN FRACTIONAL-N FREQUENCY SYNTHESIS" * figures 3 ; section II * --- | 3,4 | |
| A | MICROWAVES & RF, vol. 32, no. 1, January 1993, PENTON, CLEVELAND, OHIO, USA, pages 59-66, XP000568956 B. MILLER: "Technique enhances the performance of PLL synthesizers" * figure 3 * ----- | 3,4 | TECHNICAL FIELDS SEARCHED (Int.Cl.6) G06F |

The present search report has been drawn up for all claims

| Place of search | Date of completion of the search | Examiner |
|---|---|---|
| THE HAGUE | 29 April 1996 | Verhoof, P |

EPO FORM 1503 03.82 (P04C01)